# EUROPÄISCHE PATENTANMELDUNG

(11) **EP 3 536 984 A1**
(43) Veröffentlichungstag der Anmeldung: **11.09.2019**
(21) Anmeldenummer: 18159864.0
(22) Anmeldetag: 05.03.2018
(51) Int. Cl.: F16B 13/06

(54) **SPREIZANKER MIT ZUSATZSPREIZKÖRPER**

(71) Anmelder: HILTI Aktiengesellschaft, 9494 Schaan (LI)
(72) Erfinder: Haeussler, Karl, 7222 Lunden (CH); Shimahara, Hideki, 9472 Grabs (CH); Frensemeier, Mareike, 9470 Buchs (CH); Li, Yijun, 9470 Buchs (CH); Yan, Wentao, 9470 Buchs SG (CH); Guevara Arriola, Arturo, 9470 Buchs (CH)
(74) Vertreter: Hilti Aktiengesellschaft Corporate Intellectual Property

(57) **Zusammenfassung**

Die Erfindung betrifft einen Spreizanker mit einem Ankerbolzen (10), einer Spreizhülse (30), welche den Ankerbolzen (10) umgibt, wobei der Ankerbolzen (10) einen Spreizhülsen-Spreizbereich (15) zum radialen Verdrängen der Spreizhülse (30) aufweist, und zumindest einem Zusatzspreizkörper (40), der an der Spreizhülse (30) angeordnet ist. Erfindungsgemäss ist vorgesehen, dass der Zusatzspreizkörper (40) an dem Ankerbolzen (10) zugewanten Seite der Spreizhülse (30) angeordnet ist, und dass der Ankerbolzen (10) einen Zusatzspreizkörper-Spreizbereich (18) zum radialen Verdrängen des Zusatzspreizkörpers 40) aufweist.

## Beschreibung

Die Erfindung betrifft einen Spreizanker gemäss dem Oberbegriff des Anspruchs 1. Ein solcher Spreizanker ist ausgestattet mit einem Ankerbolzen, einer Spreizhülse, welche den Ankerbolzen umgibt, wobei der Ankerbolzen einen Spreizhülsen-Spreizbereich zum radialen Verdrängen der Spreizhülse aufweist, und zumindest einem Zusatzspreizkörper, der an der Spreizhülse angeordnet ist.

Die EP0267148 A1 zeigt einen Spreizanker mit zwei hintereinander angeordneter Spreizhülsen. Vor jeder dieser Spreizhülsen ist ein Spreizkonus angeordnet. Bei der Montage werden die beiden Spreizhülsen an ihrem jeweils vorderen Ende radial aufgeweitet.

Die nächstkommende EP0134391 A1 zeigt einen Spreizanker, bei dem an der Spreizhülse ein zusätzlicher Spreizkörper angeordnet ist, der von einer an der Spreizhülse ausgebildeten Schräge radial verdrängt wird.

Die EP2689147 B1 zeigt einen Spreizanker, dessen Spreizhülse radial nach aussen vorstehende Erhebungen aufweist, um die anfängliche Reibung zwischen Spreizhülse und Beton zu erhöhen. Insbesondere können solche Erhebungen in einem Prägeverfahren erhalten werden.

Aufgabe der Erfindung ist es, einen Spreizanker anzugeben, der bei geringem Herstellungs- und Montageaufwand besonders gute Lastwerte aufweist, insbesondere in unterschiedlichen Lastsituation, und der besonders vielfältig einsetzbar ist.

Die Aufgabe wird erfindungsgemäss durch einen Spreizanker mit den Merkmalen des Anspruchs 1 gelöst. Bevorzugte Ausführungsformen sind in den abhängigen Ansprüchen angegeben.

Ein erfindungsgemässer Spreizanker ist dadurch gekennzeichnet, dass der Zusatzspreizkörper dem Ankerbolzen gegenüberliegend an der Spreizhülse angeordnet ist, und dass der Ankerbolzen einen Zusatzspreizkörper-Spreizbereich zum radialen Verdrängen des Zusatzspreizkörpers aufweist.

Es wird also an der Spreizhülse zumindest ein weiterer, unabhängiger Spreizkörper - der Zusatzspreizkörper - vorgesehen, welcher, wie auch die Spreizhülse selbst, durch einen am Ankerbolzen angeordneten Spreizbereich radial aufgeweitet und verankert werden kann. Durch die Bereitstellung mehrerer spreizender Elemente werden zusätzliche konstruktive Freiheitsgrade zur Verfügung gestellt, die in besonders einfacher Weise eine besonders gute Anpassung des Spreizankers an unterschiedliche Lastsituationen ermöglichen können. Insbesondere kann die Expansionsfunktion an der Spreizhülse durch zusätzliche Expansion am Zusatzspreizkörper ergänzt werden. Ein weiterer Gedanke der Erfindung kann darin gesehen werden, den Zusatzspreizkörper, genauso wie die Spreizhülse, durch den Ankerbolzen zu betätigen. Zu diesem Zweck ist erfindungsgemäss der Zusatzspreizkörper dem Ankerbolzen für eine Interaktion des Ankerbolzens mit dem Zusatzspreizkörper zugewandt, und der Ankerbolzen weist einen dem Zusatzspreizkörper gewidmeten Spreizbereich auf, nämlich den Zusatzspreizkörper-Spreizbereich. Der zumindest eine Zusatzspreizkörper expandiert somit auf einer eigenen Expansionsfläche, insbesondere unabhängig von der primären Expansion der Spreizhülse. Durch diese Konfiguration können die Expansionsprozesse der spreizenden Elemente in besonders einfacher und zugleich zuverlässiger Weise besonders präzise aufeinander abgestimmt werden, so dass besonders gute Lastwerte, insbesondere in unterschiedlichen Lastsituationen, erhalten werden können.

Der Spreizhülsen-Spreizbereich des Ankerbolzens kann die Spreizhülse radial verdrängen, wenn der Spreizhülsen-Spreizbereich in die Spreizhülse eingezogen wird, insbesondere wenn der Spreizhülsen-Spreizbereich relativ zur Spreizhülse axial nach hinten versetzt wird. Vorzugsweise dient der Spreizhülsen-Spreizbereich zum radialen Verdrängen der Spreizhülse beim axialen Versetzen des Spreizhülsen-Spreizbereichs relativ zur Spreizhülse nach hinten. Zweckmässigerweise konvergiert der Spreizhülsen-Spreizbereich des Ankerbolzens nach hinten hin, was insbesondere beinhalten soll, dass sich im Spreizhülsen-Spreizbereich die Oberfläche des Ankerbolzens nach hinten hin an die Längsachse des Ankerbolzens annähert, insbesondere kontinuierlich annähert. Beispielsweise kann der Spreizhülsen-Spreizbereich eine Konusform bilden.

Der Zusatzspreizkörper-Spreizbereich des Ankerbolzens kann den Zusatzspreizkörper radial verdrängen, wenn der Zusatzspreizkörper-Spreizbereich relativ zum Zusatzspreizkörper axial nach hinten versetzt wird. Vorzugsweise dient der Zusatzspreizkörper-Spreizbereich zum radialen Verdrängen des Zusatzspreizkörpers beim axialen Versetzen des Zusatzspreizkörper-Spreizbereichs relativ zum Zusatzspreizkörper nach hinten. Zweckmässigerweise konvergiert der Zusatzspreizkörper-Spreizbereich des Ankerbolzens nach hinten hin, was insbesondere beinhalten soll, dass sich im Zusatzspreizkörper-Spreizbereich die Oberfläche des Ankerbolzens nach hinten hin an die Längsachse des Ankerbolzens annähert, insbesondere kontinuierlich annähert.

Vorzugsweise sind der Spreizhülsen-Spreizbereich und der Zusatzspreizkörper-Spreizbereich, insbesondere axial, voneinander beabstandet, was im Hinblick auf die Bauform vorteilhaft sein kann. Insbesondere bilden der Spreizhülsen-Spreizbereich und der Zusatzspreizkörper-Spreizbereich zur Längsachse des Ankerbolzens geneigte Schrägen.

Der Zusatzspreizkörper ist dem Ankerbolzen gegenüberliegend an der Spreizhülse angeordnet, so dass der Zusatzspreizkörper-Spreizbereich des Ankerbolzens, vorzugsweise unmittelbar, gegen den Zusatzspreizkörper wirken kann. Insbesondere kann der Zusatzspreizkörper radial zwischen der Spreizhülse und dem Ankerbolzen und/oder radial innenliegend an der Spreizhülse angeordnet sein. Vorzugsweise steht der Zusatzspreizkörper über die Spreizhülse radial nach innen zum Ankerbolzen hin vor. Zweckmässigerweise liegt der Zusatzspreizkörper, zumindest zeitweise während des Montagevorgangs und vorzugsweise auch schon vor dem Montagevorgang, am Ankerbolzen an, insbesondere an dessen Zusatzspreizkörper-Spreizbereich. Insbesondere befindet sich der Zusatzspreizkörper auf Höhe der Spreizhülse, das heisst die Spreizhülse überlappt den Zusatzspreizkörper in axialer Richtung.

Soweit hier von der Axialrichtung, der Umfangsrichtung und der Radialrichtung die Rede ist, soll sich dies insbesondere auf die Längsachse des Ankerbolzens beziehen, welche insbesondere mit der Längsachse des Spreizankers zusammenfallen kann. Die Längsachse des Ankerbolzens verläuft insbesondere in Montagerichtung, also in der Richtung, in welche der Ankerbolzen bei bestimmungsgemässer Montage in ein Bohrloch eingeschoben wird und/oder in Auszugsrichtung, also in der Richtung, in welcher der Ankerbolzen nach der Montage bestimmungsgemäss belastet wird. Die Richtungsangaben "vorne" und "hinten" beziehungsweise "rückwärtig" sollen hier einheitlich verwendet werden, dies insbesondere soweit diese Richtungsangaben im Zusammenhang mit dem Ankerbolzen, der Spreizhülse und dem Zusatzspreizkörper verwendet werden. Insbesondere sollen sich die Richtungsangaben auf die Axialrichtung beziehen.

Der Ankerbolzen kann auch mehrteilig ausgeführt sein und beispielsweise eine Ankerstange und ein mit der Ankerstange verschraubtes Vorderteil aufweisen, an dem der Spreizhülsen-Spreizbereich und vorzugsweise auch der Zusatzspreizkörper-Spreizbereich angeordnet sind. Besonders bevorzugt ist es aber, dass der Ankerbolzen einstückig ausgebildet ist. Vorzugsweise bestehen die Spreizhülse, der zumindest eine Zusatzspreizkörper und/oder der Ankerbolzen aus einem Metallmaterial. Vorzugsweise sind die Spreizhülse und der Zusatzspreizkörper separate Teile. Insbesondere sind der Spreizhülsen-Spreizbereich und der Zusatzspreizkörper-Spreizbereich zugfest am Ankerbolzen angeordnet, so dass über diese Bereiche nach hinten gerichtete Zugkräfte übertragen werden können.

Die Spreizhülse umgibt den Ankerbolzen, insbesondere ringförmig. Die Spreizhülse bildet vorzugsweise einen offenen Ring, also eine C-Form, in dem beziehungsweise in der der Ankerbolzen aufgenommen ist. Dies kann eine besonders einfache Herstellung durch Aufwickeln eines Bandes um den Ankerbolzen ermöglichen. Vorzugsweise sind die Spreizhülse und der Ankerbolzen koaxial angeordnet.

In einem rückwärtigen Bereich des Ankerbolzens kann der Ankerbolzen eine Lastangriffsstruktur aufweisen. Die Lastangriffsstruktur dient zum Einleiten von in Auszugsrichtung gerichteten Zugkräften in den Ankerbolzen. Die Lastangriffsstruktur kann beispielsweise ein Aussengewinde oder ein Innengewinde sein. In einer anderen Ausgestaltung kann die Lastangriffsstruktur auch ein Kopf sein, der ein Querschnittsmaximum bildet.

Soweit nicht anders angegeben sollen die hier beschriebenen Merkmale vorzugsweise für einen nicht-montierten Spreizanker, also einen Spreizanker vor der Montage, gelten, und/oder für einen Zustand, in welchem der Zusatzspreizkörper-Spreizbereich den Zusatzspreizkörper noch nicht radial versetzt hat.

Der Spreizanker kann auch mehrere Zusatzspreizkörper aufweisen, von denen zumindest einige, vorzugsweise alle, so ausgeführt sind, wie es hier im Zusammenhang mit einem einzigen Zusatzspreizkörper erläutert ist. Sofern mehrere Zusatzspreizkörper vorgesehen sind, weist der Ankerbolzen vorzugsweise mehrere Zusatzspreizkörper-Spreizbereiche auf, jeweils einen pro Zusatzspreizkörper. Die Zusatzspreizkörper-Spreizbereiche sind vorzugsweise voneinander getrennt.

Vorzugsweise weist die Spreizhülse einen nach vorne gerichteten Mitnehmer für den Zusatzspreizkörper auf. Dieser Mitnehmer kann den Zusatzspreizkörper axial relativ zur Spreizhülse festlegen, wenn der Ankerbolzen relativ zur Spreizhülse nach hinten bewegt wird, so dass der Zusatzspreizkörper-Spreizbereich gegen den Zusatzspreizkörper wirken kann.

Besonders bevorzugt ist es, dass der Zusatzspreizkörper in einer in der Spreizhülse ausgebildeten Ausnehmung angeordnet ist. An der Wand dieser Ausnehmung kann der vorgenannte Mintnehmer für den Zusatzspreizkörper in konstruktiv besonders einfacher Weise gebildet sein. Mittels einer solchen Ausnehmung kann der Zusatzspreizkörper besonders einfach und zuverlässig positioniert werden. Insbesondere erstreckt sich die Ausnehmung ausgehend von der radialen Innenseite der Spreizhülse radial nach aussen in die Spreizhülse hinein.

Vorzugsweise kann vorgesehen sein, dass die Spreizhülse an der Ausnehmung, insbesondere radial, durchbrochen ist. Gemäss dieser Ausgestaltung kann der Zusatzspreizkörper in konstruktiv besonders einfacher Weise besonders gut gegen die den Spreizanker umgebende Lochwand wirken und somit bei geringem Aufwand eine besonders effiziente Verankerung bewirken.

Besonders bevorzugt ist es, dass an der Spreizhülse ein Lappen angeordnet ist, der die Ausnehmung zumindest bereichsweise überdeckt, insbesondere radial überdeckt. Der Lappen steht zweckmässigerweise radial aussenseitig an der Spreizhülse vor und/oder der Zusatzspreizkörper ist radial zwischen dem Lappen und dem Ankerbolzen angeordnet. Insbesondere kann der Zusatzspreizkörper, wenn er vom Zusatzspreizkörper-Spreizbereich radial verdrängt wird, seinerseits den Lappen radial verdrängen und den Lappen, insbesondere unter Ausbildung eines Hinterschnitts, an die umgebende Lochwand anpressen und somit im Bohrloch verankern. Darüber hinaus kann der Lappen zu Beginn des Montagevorgangs an der Lochwand reiben und damit die Spreizhülse axial an der Lochwand sichern. Ferner kann der Lappen den Zusatzspreizkörper vor der Montage am Spreizanker sichern. Der Lappen kann also eine Doppelfunktion oder sogar eine Dreifachfunktion innehaben, so dass die Leistungsfähigkeit und Handhabbarkeit des Spreizankers in besonders einfacher Weise noch weiter verbessert werden können. Vorzugsweise ist der Lappen so zur Längsachse geneigt, dass er sich nach vorne hin an die Längsachse annähert, das heisst der Lappen öffnet sich nach hinten hin und/oder der Lappen zeigt nach hinten hin. Hierdurch kann der Lappen eine Art Widerhaken bilden und die Spreizhülse somit zu Beginn des Montagevorgangs besonders wirksam an der Lochwand sichern.

Der Lappen ist ein Teil des Spreizankers. Vorzugsweise ist der Lappen integral mit der Spreizhülse ausgeführt. Der Lappen kann in besonders einfacher Weise durch Einschneiden der Spreizhülse an drei Seiten gefertigt werden, wobei die vierte Seite ein Scharnier des Lappens bildet. Bei der Fertigung des Spreizankers kann vorgesehen werden, dass der Lappen aufgebogen wird, sodann der Zusatzspreizkörper in der Ausnehmung angeordnet wird und sodann der Lappen zurückgebogen wird und hierbei der Zusatzspreizkörper vom Lappen in der Ausnehmung gesichert wird. Insbesondere ist der Zusatzspreizkörper zwischen dem Lappen und dem Ankerbolzen angeordnet.

Eine weitere bevorzugte Ausgestaltung der Erfindung liegt darin, dass der Zusatzspreizkörper ein Rollkörper ist. Dies kann insbesondere beinhalten, dass der Zusatzspreizkörper zumindest eine Symmetrieachse aufweist, um welche eine Drehung um jeden beliebigen Winkel den Körper auf sich selbst abbildet. Dies kann im Hinblick auf den Herstellungsaufwand und den Spreizmechanismus vorteilhaft sein.

Der Zusatzspreizkörper kann beispielsweise Kugelform, Zylinderform, Blockform, Tropfenform oder Keilform aufweisen.

Eine andere zweckmässige Weiterbildung der Erfindung liegt darin, dass der Zusatzspreizkörper-Spreizbereich und der Spreizhülsen-Spreizbereich unterschiedlich steil sind. Dies kann insbesondere beinhalten, dass die maximalen spitzen Winkel mit Längsachse der beiden Spreizbereiche unterschiedlich sind. Hierdurch kann das Verankerungsverhalten besonders gut an die Randbedingungen angepasst werden.

Besonders bevorzugt ist es, dass der Ankerbolzen eine Vertiefung aufweist, in welcher der Zusatzspreizkörper, zumindest anfänglich, angeordnet ist. Insbesondere kann der Zusatzspreizkörper-Spreizbereich an einer Wand der Vertiefung, insbesondere an einer vorderen Wand der Vertiefung, gebildet sein. Dies kann den konstruktiven Aufwand noch weiter reduzieren. Die Vertiefung kann beispielsweise in einem Halsbereich des Ankerbolzens angeordnet sein, in welchem der Ankerbolzen eine kreiszylindrische Form hat. Die Vertiefung kann aber auch in einem konischen Spreizhülsen-Spreizbereich angeordnet sein. Die Vertiefung erstreckt sich radial in den Ankerbolzen hinein. Insbesondere kann die Vertiefung des Ankerbolzens der in der Spreizhülse ausgebildete Ausnehmung gegenüberliegen.

In einer Ausgestaltung des Spreizankers kann vorgesehen werden, dass die Spreizhülse mehrlagig, insbesondere zweilagig, ausgebildet ist. Die Spreizhülse kann also aus beispielsweise zwei ineinander geschachtelten Einzelhülsen bestehen, welche vergleichsweise geringe Wandstärken aufweisen. Eine damit einhergehende leichtere Biegbarkeit kann die Montageenergie verringern. Mehrlagige Spreizhülsen können zusätzliche Freiheitsgrade zur Steuerung des zeitlichen Ablaufs der zusätzlichen Expansion zur Verfügung stellen Besonders bevorzugt ist es, dass der Ankerbolzen einen Mitnehmer aufweist, der die Spreizhülse, insbesondere bei der Montage des Spreizankers, nach vorne hin mitnehmen kann. Hierdurch kann unter anderem der Materialaufwand, insbesondere für die Spreizhülse, noch weiter reduziert werden. Der Mitnehmer kann an der Spreizhülse, insbesondere von hinten, angreifen und die Spreizhülse nach vorne mitnehmen, wenn der Ankerbolzen nach vorne versetzt wird. Besonders bevorzugt ist es, dass der Mitnehmer eine, insbesondere im Längsschnitt des Ankerbolzens ausgebildete, Anschlagschulter ist. Dies kann unter anderem im Hinblick auf den Fertigungsaufwand vorteilhaft sein. Insbesondere kann die Anschlagschulter den Ankerbolzen und/oder dessen Längsachse ringförmig umlaufen.

Die Erfindung betrifft auch die bestimmungsgemässe Verwendung des Spreizankers, insbesondere die bestimmungsgemässe Montage des Spreizankers. Insbesondere betrifft die Erfindung eine Verwendung eines erfindungsgemässen Spreizankers, bei welcher der Ankerbolzen relativ zur Spreizhülse, insbesondere nach hinten, versetzt wird und hierbei die Spreizhülse vom Spreizhülsen-Spreizbereich und der Zusatzspreizkörper vom Zusatzspreizkörper-Spreizbereich radial verdrängt wird. Bei Belastung wandert der Ankerbolzen mitsamt seinem Spreizhülsen-Spreizbereich relativ zur Spreizhülse nach hinten. Der Zusatzspreizkörper wird dabei von der Spreizhülse axial lagefixiert und durch den Zusatzspreizkörper-Spreizbereich radial nach aussen verschoben.

Die zeitliche Abfolge der Expansion von Spreizhülse und Zusatzspreizkörper kann in besonders einfacher Weise durch eine Variation der Lage der Ausnehmung in der Spreizhülse und der Lage der Vertiefung im Ankerbolzen oder/und durch die Formgebung der Ausnehmung in der Spreizhülse und die Formgebung der Vertiefung im Ankerbolzen konstruktiv eingestellt werden. Durch Variation der Grösse des Zusatzspreizkörpers können der Montagedurchmesser des Spreizankers sowie der Grad der möglichen zusätzlichen Expansion und die Montageenergie in besonders einfacher Weise konstruktiv eingestellt werden: Kleine Zusatzspreizkörper machen den anfänglichen Durchmesser kleiner und die Montage leichter. Vergrössert man die Zusatzspreizkörper wird höhere Montageenergie benötigt.

Merkmale, die im Zusammenhang mit dem erfindungsgemässen Spreizanker erläutert werden, können auch bei der erfindungsgemässen Verwendung zum Einsatz kommen, so wie auch umgekehrt Merkmale, die im Zusammenhang mit der erfindungsgemässen Verwendung erläutert werden, auch beim erfindungsgemässen Spreizanker zum Einsatz kommen können.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine Seitenansicht einer ersten Ausführungsform eines erfindungsgemässen Spreizankers;
- Figur 2:: eine Seitenansicht des Ankerbolzens des Spreizankers aus Figur 1 mitsamt den Zusatzspreizkörpern, aber ohne Spreizhülse,
- Figur 3:: eine Seitenansicht der Spreizhülse des Spreizankers aus Figur 1;
- Figur 4:: eine Längsschnittansicht des Spreizankers aus Figur 1;
- Figur 5:: eine Seitenansicht, analog Figur 2, des Ankerbolzens mitsamt den Zusatzspreizkörpern und ohne Spreizhülse, einer ersten Abwandlung des Spreizankers der Figuren 1 bis 4;
- Figur 6:: eine Längsschnittansicht, analog Figur 4, einer zweiten Abwandlung des Spreizankers der Figuren 1 bis 4; und
- Figur 7:: eine Seitenansicht der Einzelhülsen des abgewandelten Spreizankers gemäss Figur 6.

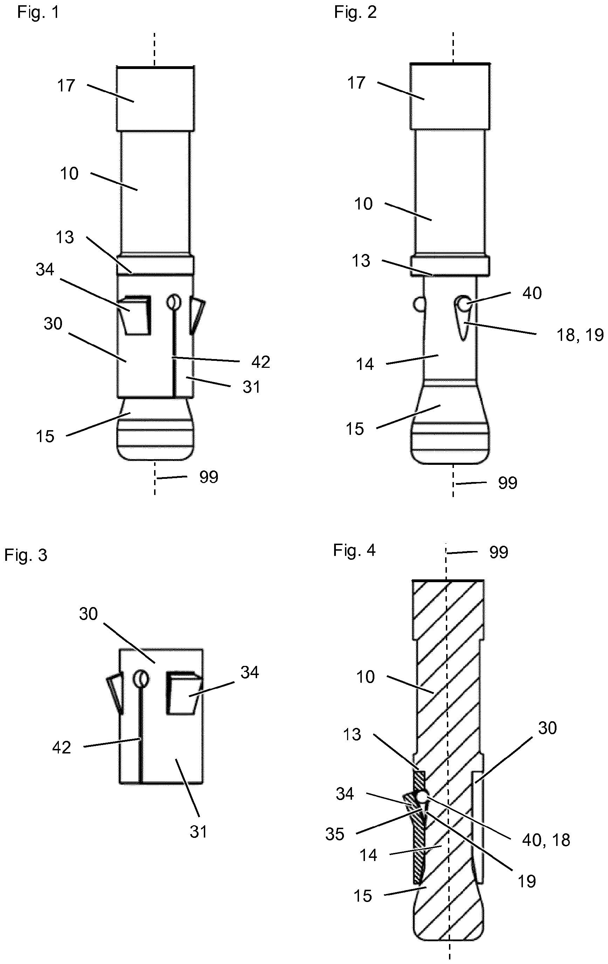

Die Figuren 1 bis 4 zeigen ein erstes Ausführungsbeispiel eines erfindungsgemässen Spreizankers. Der Spreizanker weist einen Ankerbolzen 10 mit einer Längsachse 99 sowie eine Spreizhülse 30 auf, wobei die Spreizhülse 30 den Ankerbolzen 10 ringförmig umgibt. Der Ankerbolzen 10 weist einen Halsbereich 14 mit zumindest annähernd konstantem Querschnitt auf. Im Anschluss an den Halsbereich 14 weist der Ankerbolzen 10 vor dem Halsbereich 14, im vorderen Endbereich des Ankerbolzens 10, einen Spreizhülsen-Spreizbereich 15 für die Spreizhülse 30 auf, der hier beispielhaft integral mit dem Rest des Ankerbolzens 10 ausgeführt ist. Am Spreizhülsen-Spreizbereich 15 weitet sich der Ankerbolzen 10 an seiner Aussenoberfläche ausgehend vom Halsbereich 14 nach vorne hin auf, das heisst der Spreizhülsen-Spreizbereich 15 konvergiert an seiner Aussenseite nach hinten hin. Die Spreizhülse 30 umgibt den Halsbereich 14 des Ankerbolzens 10. Der Spreizhülsen-Spreizbereich 15 ist grösstenteils vor der Spreizhülse 30 angeordnet. Der Halsbereich 14 ist hier kreiszylindrisch und der Spreizhülsen-Spreizbereich 15 konisch ausgebildet.

Der Ankerbolzen 10 weist ferner einen beispielsweise als Kreisring ausgebildeten Mitnehmer 13 auf, der eine Axialbewegung der Spreizhülse 30 zum rückwärtigen Ende des Ankerbolzens 10 hin, das heisst eine Axialbewegung der Spreizhülse 30 vom Spreizhülsen-Spreizbereich 15 hinweg, begrenzt.

An seinem dem Spreizhülsen-Spreizbereich 15 entgegengesetzten rückwärtigen Endbereich weist der Ankerbolzen 10 eine, hier beispielsweise als Aussengewinde dargestellte, Lastangriffsstruktur 17 zum Einleiten von Zugkräften in den Ankerbolzen 10 auf. Auf diesem Aussengewinde kann eine nicht dargestellte Mutter mit korrespondierendem Innengewinde angeordnet sein.

Die Spreizhülse 30 weist mehrere Schlitze 42 auf, welche sich ausgehend von der vorderen Stirnseite der Spreizhülse 30, die dem Spreizhülsen-Spreizbereich 15 zugewandt ist, axial nach hinten in die Spreizhülse 30 hinein erstrecken. Die Schlitze 42 teilen Spreizzungen 31 der Spreizhülse 30 voneinander ab. Diese Spreizzungen 31 sind jeweils an ihrer Vorderseite und an ihren beiden entgegengesetzten Längsseiten frei und an ihren jeweiligen Rückseiten miteinander verbunden. Die Spreizzungen 31 sind somit vorderseitig frei und zeigen axial nach vorne, zum Spreizhülsen-Spreizbereich 15 hin.

Die Spreizhülse 30 weist mehrere Ausnehmungen 35 auf, welche sich von der radialen Innenseite der Spreizhülse 30 radial nach aussen hin erstrecken. Der Ankerbolzen 10 weist, insbesondere in seinem Halsbereich 14, mehrere radiale Vertiefungen 18 auf, welche sich radial nach innen in den Ankerbolzen 10 erstrecken. Jede Vertiefung 18 im Ankerbolzen 10 ist von einer Ausnehmung 35 unter Bildung eines Vertiefungs-Ausnehmungs-Paares überdeckt. In jedem der Vertiefungs-Ausnehmungs-Paare ist ein Zusatzspreizkörper 40 angeordnet. Am vorderen Ende jeder Vertiefung 18 ist eine schräge Wand angeordnet, die einen Zusatzspreizkörper-Spreizbereich 19 zum radialen Verdrängen des jeweiligen Zusatzspreizkörper 40 nach aussen bildet.

An den Ausnehmungen 35 ist die Spreizhülse 30 radial durchbrochen. Allerdings weist der Spreizanker Lappen 34 auf, wobei jede Ausnehmung 35 von einem Lappen 34 radial abgedeckt ist. Die Lappen 34 stehen an der Spreizhülse 30 radial nach aussen vor. Die Lappen 34 sind an ihrem jeweils vorderen Ende mit der Spreizhülse 30 verbunden. Die Lappen 34 sind somit rückseitig frei und zeigen nach hinten, vom Spreizhülsen-Spreizbereich 15 weg. Die Lappen 34 sind einstückig mit der Spreizhülse 30 ausgeführt. Insbesondere können die Lappen 34 jeweils durch U-förmiges Einschneiden der Spreizhülse 30 gebildet werden.

Beim Montieren des Spreizankers wird der Ankerbolzen 10 mit seinem vorderen Ende voran in Richtung der Längsachse 99 des Ankerbolzens 10 in ein Bohrloch geschoben. Aufgrund des Mitnehmers 13, der eine Verschiebung der Spreizhülse 30 zum hinteren Ende des Ankerbolzens 10 begrenzt, wird dabei auch die Spreizhülse 30 in das Bohrloch eingebracht. Sodann wird der Ankerbolzen 10, beispielsweise durch Anziehen einer Mutter, die auf der als Aussengewinde ausgebildeten Lastangriffsstruktur 17 angeordnet ist, wieder ein Stück weit aus dem Bohrloch herausgezogen. Aufgrund von Reibung mit der Bohrlochwand, die insbesondere an den radial nach aussen vorstehenden Lappen 34 generiert wird, bleibt die Spreizhülse 30 dabei zurück und es kommt zu einer axialen Verschiebung des Ankerbolzens 10 relativ zur Spreizhülse 30 nach hinten. Die Zusatzspreizkörper 40 werden dabei in den Ausnehmungen 35 in der Spreizhülse 30 axial an der Spreizhülse 30 festgehalten, so dass eine axiale Verschiebung des Ankerbolzens 10 relativ zu den Zusatzspreizkörpern 40 nach hinten resultiert. Im Verlauf dieser Verschiebung laufen zum einen die Spreizzungen 31 der Spreizhülse 30 auf den Spreizhülsen-Spreizbereich 15 auf und werden von diesem radial gegen die Bohrlochwand nach aussen gedrängt, und zum anderen laufen die Zusatzspreizkörper 40 auf ihre Zusatzspreizkörper-Spreizbereiche 19 auf, und werden von diesen radial nach aussen gegen die jeweils darüberliegenden Lappen 34 gedrängt, die wiederum radial nach aussen gegen die Lochwand gedrängt werden. Durch diese Mechanismen wird der Spreizanker im Substrat fixiert.

Bei der Ausführungsform der Figuren 1 bis 4 sind die Zusatzspreizkörper 40 kugelförmig und die Vertiefungen 18 tropfenförmig ausgebildet, wobei die Zusatzspreizkörper-Spreizbereiche 19 nach vorne spitz zulaufen.

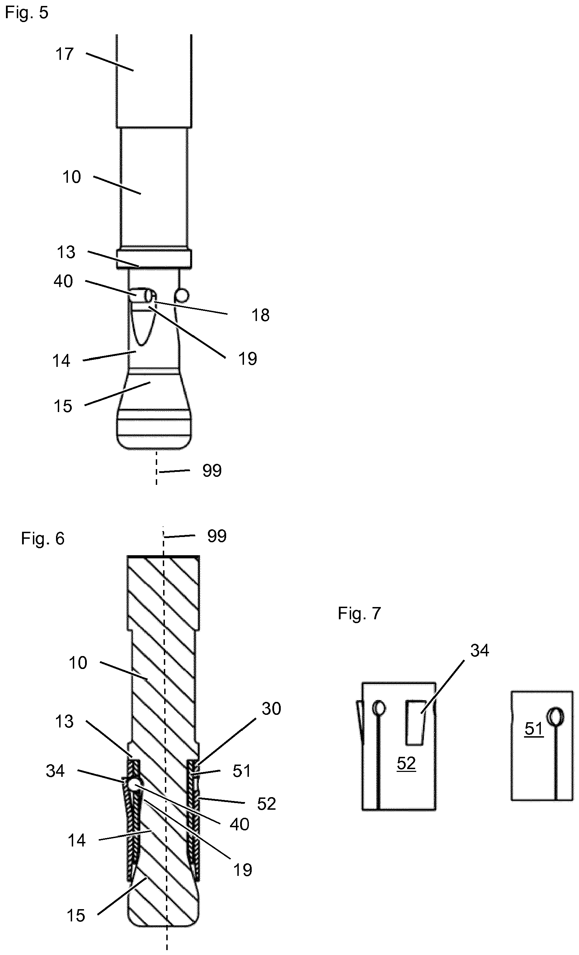

In einer in Figur 5 dargestellten ersten Abwandlung der ersten Ausführungsform sind die Zusatzspreizkörper 40 kreiszylindrisch und die Vertiefungen 18 entsprechend breiter ausgeführt. Ansonsten entspricht diese erste Abwandlung der ersten Ausführungsform, so dass auf die Figuren 1, 3 und 4 sowie auf die Beschreibung der ersten Ausführungsform verwiesen wird, die auch für die erste Abwandlung gelten.

In einer in den Figur 6 und 7 dargestellten zweiten Abwandlung der ersten Ausführungsform ist die Spreizhülse 30 zweilagig mit zwei koaxialen Einzelhülsen 51 und 52 ausgeführt. Ansonsten entspricht diese zweite Abwandlung der ersten Ausführungsform, so dass auf die Figuren 1 und 2 sowie auf die Beschreibung der ersten Ausführungsform verwiesen wird, die auch für die zweite Abwandlung gelten.

Die Einzelhülse 51 ist innerhalb der Einzelhülse 52 angeordnet. Die Lappen 34 sind an der aussenliegenden Einzelhülse 52 befestigt und integral mit der aussenliegenden Einzelhülse 52 ausgeführt. Die aussenliegende Einzelhülse 52 steht nach vorne über die innenliegende Einzelhülse 51 vor.

## Patentansprüche

1. Spreizanker mit
- einem Ankerbolzen (10),
- einer Spreizhülse (30), welche den Ankerbolzen (10) umgibt, wobei der Ankerbolzen (10) einen Spreizhülsen-Spreizbereich (15) zum radialen Verdrängen der Spreizhülse (30) aufweist, und
- zumindest einem Zusatzspreizkörper (40), der an der Spreizhülse (30) angeordnet ist,
**dadurch gekennzeichnet,**
**dass** der Zusatzspreizkörper (40) dem Ankerbolzen (10) gegenüberliegend an der Spreizhülse (30) angeordnet ist, und
**dass** der Ankerbolzen (10) einen Zusatzspreizkörper-Spreizbereich (19) zum radialen Verdrängen des Zusatzspreizkörpers (40) aufweist.

2. Spreizanker nach Anspruch 1,
**dadurch gekennzeichnet,**
**dass** der Zusatzspreizkörper (40) in einer in der Spreizhülse (30) ausgebildeten Ausnehmung (35) angeordnet ist.

3. Spreizanker nach Anspruch 2,
**dadurch gekennzeichnet,**
**dass** die Spreizhülse (30) an der Ausnehmung (35) durchbrochen ist.

4. Spreizanker nach einem der Ansprüche 2 oder 3,
**dadurch gekennzeichnet,**
**dass** an der Spreizhülse (30) ein Lappen (34) angeordnet ist, der die Ausnehmung (35) zumindest bereichsweise überdeckt.

5. Spreizanker nach einem der vorstehenden Ansprüche,
**dadurch gekennzeichnet,**
**dass** der Zusatzspreizkörper (40) ein Rollkörper ist.

6. Spreizanker nach einem der vorstehenden Ansprüche,
**dadurch gekennzeichnet,**
**dass** der Zusatzspreizkörper-Spreizbereich (19) und der Spreizhülsen-Spreizbereich (15) unterschiedlich steil sind.

7. Spreizanker nach einem der vorstehenden Ansprüche,
**dadurch gekennzeichnet,**
**dass** der Ankerbolzen (10) eine Vertiefung (18) aufweist, in welcher der Zusatzspreizkörper (40) angeordnet ist, und dass der Zusatzspreizkörper-Spreizbereich (19) an einer Wand der Vertiefung (18) gebildet ist.

8. Spreizanker nach einem der vorstehenden Ansprüche,
**dadurch gekennzeichnet,**
**dass** die Spreizhülse (30) mehrlagig ausgebildet ist.

9. Spreizanker nach einem der vorstehenden Ansprüche,
**dadurch gekennzeichnet,**
**dass** der Ankerbolzen (10) einen Mitnehmer (13) für die Spreizhülse (30) aufweist, der die Spreizhülse (30) nach vorne hin mitnehmen kann.

10. Verwendung eines Spreizankers nach einem der vorstehenden Ansprüche, bei welcher der Ankerbolzen (10) relativ zur Spreizhülse (30) versetzt wird und hierbei die Spreizhülse (30) vom Spreizhülsen-Spreizbereich (15) und der Zusatzspreizkörper (40) vom Zusatzspreizkörper-Spreizbereich (19) radial verdrängt wird.
